# EUROPÄISCHE PATENTSCHRIFT

(11) **EP 3 618 197 B1**
(45) Veröffentlichungstag und Bekanntmachung des Hinweises auf die Patenterteilung: **07.07.2021**
(21) Anmeldenummer: 19191624.6
(22) Anmeldetag: 14.08.2019
(51) Int. Cl.: H01R 13/6473, H01R 13/6593, H01R 4/18, H01R 13/6581, H01R 13/646

(54) **MEHRADRIGE KABELANORDNUNG**
MULTICORE CABLE ASSEMBLY
AGENCEMENT DE CABLE MULTI-BRINS

(30) Priorität: 30.08.2018 DE 102018121239
(43) Veröffentlichungstag der Anmeldung: 04.03.2020
(73) Patentinhaber: Rosenberger Hochfrequenztechnik GmbH & Co. KG, 83413 Fridolfing (DE)
(72) Erfinder: LÖDDING, Thomas, 83278 Traunstein (DE); SCHMID, Johannes, 84503 Altötting (DE); PICHLMAIER, Richard, 83413 Fridolfing (DE)
(74) Vertreter: Warneke, Nicola

(56) Entgegenhaltungen:
- DE-A1-102006 044 479
- US-A1- 2018 026 401

## Beschreibung

### GEBIET DER ERFINDUNG

Die vorliegende Erfindung betrifft eine Kabelanordnung bzw. eine Verbinderanordnung mit einer Kabelanordnung.

### TECHNISCHER HINTERGRUND

Die DE 10 2006 044479 A1 zeigt ein Kabel, welches an einem Ende mit einem Verbinder verbindbar ist, mit wenigstens zwei Adern, einem Isoliermittel und mit einer Hülse, welche an dem Ende des Kabels ausgebildet ist, wobei die Hülse einen ersten Bereich mit einem länglichen Querschnitt aufweist und einen zweiten Bereich mit einem im Wesentlichen runden Querschnitt aufweist.

Die US 2018/026401 A1 zeigt ein Kabel mit einer Hülse.

### ZUSAMMENFASSUNG DER ERFINDUNG

Vor diesem Hintergrund liegt der vorliegenden Erfindung die Aufgabe zugrunde, eine Kabelanordnung mit verbesserten elektrischen Eigenschaften anzugeben.

Erfindungsgemäß wird diese Aufgabe durch eine Kabelanordnung mit den Merkmalen des Patentanspruchs 1 gelöst.

Aufgrund der wenigstens zwei Adern, die nebeneinander angeordnet sind, begrenzt die Schirmung, welche die Adern ummantelt, einen länglichen Querschnitt. Um die Haltekraft einer Hülse an der Schirmung zu erhöhen, schlägt die Erfindung vor, die Hülse in dem Bereich, in dem die Hülse mit der Schirmung zu verbinden ist, an die Kontur bzw. den Querschnitt des Schirmgeschlechts anzupassen.

Da das Kabel mit der Hülse in der Regel im Rahmen einer weiteren Prozessierung mit einem Außenleiter von einem runden Querschnitt verbunden wird, schlägt die Erfindung ferner vor, in einem zweiten Bereich der Hülse einen im Wesentlichen runden Querschnitt vorzusehen.

Erfindungsgemäß ist die Hülse auf der Schirmung ausgebildet und ein verbinderseitiges Ende der Schirmung ist um die Hülse umgeschlagen, wobei sich die umgeschlagene Schirmung bis hinter die Hülse erstreckt. Somit ist auch eine verbesserte Haftung der umgeschlagenen Schirmung auf der Hülse gewährleistet.

Durch Hülsenform wird die Schirmung, welche um die Stützhülse umgeschlagen wird, derart geführt, dass Luftkammern zwischen Außenleitern und Kabeladern reduziert und dadurch elektrische Störstellen reduziert werden.
Der erste Bereich der Hülse ist derart geformt, dass die Schirmung der Leitung in eine definierte, insbesondere konturfolgende, Lage zu den Einzeladern des Kabels und dem Außenleiter des Steckverbinders gebracht wird.

Unter "länglich" wird in dieser Anmeldung verstanden, dass eine Erstreckung in einer ersten Richtung größer ist als eine Erstreckung in einer zweiten Richtung, wobei die zweite Richtung zu der ersten Richtung senkrecht ist.

Unter einem im Wesentlichen runden Querschnitt werden runde Querschnitte, die Einbuchtungen in axialer Richtung aufweisen können, verstanden.

Längliche Querschnitte können beispielsweise im Wesentlichen langlochförmig sein, d.h. kurze Seiten werden durch Halbkreise gebildet, wobei die langen Seiten die kurzen Seiten verbinden. Der Begriff langlochförmig schließt nicht aus, dass die langen Seiten Einbuchtungen aufweisen können.

Vorteilhafte Ausgestaltungen und Weiterbildungen ergeben sich aus den weiteren Unteransprüchen sowie aus der Beschreibung unter Bezugnahme auf die Figuren der Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Gemäß einer bevorzugten Weiterbildung der Erfindung ist der erste Bereich an einem ersten verbinderseitigen Ende der Hülse und der zweite Bereich an einem zweiten Ende ausgebildet. Dementsprechend lässt sich die Erfindung auf ein Kabel mit Adern, die nebeneinander angeordnet sind und einen länglichen Querschnitt bilden, anwenden. Es versteht sich jedoch, dass die Erfindung auch auf Kabel mit Adern, die in einem runden Querschnitt angeordnet sind, anwendbar ist. Dementsprechend kann also alternativ vorgesehen sein, dass die Hülse an einem verbinderseitigen Ende einen runden Querschnitt aufweist und an einem gegenüberliegenden Ende länglich ausgebildet ist.

Gemäß einer bevorzugten Weiterbildung der Erfindung sind die wenigstens zwei Adern miteinander verdrillt. In diesem Fall spricht man auch von sogenannten "twisted pair"-Kabeln. Die Erfindung wirkt sich auf "twisted pair"-Kabel besonders vorteilhaft aus, da es bei konventionellen länglichen Hülsen zu einer geringen Fertigungstoleranz während der Montage der Hülse auf der Schirmung kommt. Dabei kommt es oft zu Problemen, wenn eine Hülse gegenüber dem Kabel während der Montage geringgradig verdreht ist. Diese Problemstellung lässt sich aufgrund des zweiten Bereichs mit dem runden, also rotationssymmetrischen Querschnitt, entschärfen.

Gemäß einer bevorzugten Weiterbildung der Erfindung weist der erste Bereich zwei gegenüberliegende U-förmige Laschen auf. Dementsprechend kann die Hülse in dem ersten Bereich unterbrochen sein. Dies wirkt sich besonders vorteilhaft auf die Herstellbarkeit bzw. die Herstellungskosten einer Hülse aus. Alternativ kann vorgesehen sein, dass die Hülse mit den verschiedenen Querschnitten in dem ersten bzw. zweiten Bereich eine Kröpfung zwischen dem ersten und dem zweiten Bereich aufweist.

Dabei kann vorgesehen sein, dass die U-förmigen Laschen in einem Verarbeitungsschritt, z.B. durch Crimpen, derart verformt werden, dass diese sich berühren oder sich überlappen. Gemäß einer bevorzugten Weiterbildung der Erfindung weist die Hülse eine Einbuchtung, welche konturfolgend zu der Schirmung ist, auf. Die Einbuchtung entsteht dementsprechend auf der Ober- bzw. Unterseite zwischen zwei Adern. Hierdurch werden die elektrischen Eigenschaften des Kabels in dem Bereich der Hülse verbessert.

Es versteht sich, dass die Erfindung sich auch auf eine Verbinderanordnung mit einem Verbinder und mit einer Kabelanordnung, wie sie vorstehend beschrieben wurde, anwendbar ist. Dabei ist die Kabelanordnung an einem verbinderseitigen Ende mit dem Verbinder verbunden, indem ein Außenleiter der Verbinderanordnung mit dem Kabel vercrimpt ist.

Es versteht sich jedoch, dass die vorliegende Erfindung auf sämtliche Verbindungsoptionen eines Kabels anwendbar ist. Dementsprechend lässt sich ein Kabel auch mit einem anderen Kabel oder beispielsweise mit einem Funkmodul verbinden. Gemäß einer bevorzugten Weiterbildung der Erfindung ist es dabei zweckmäßig, die Hülse, die Schirmung und den Außenleiter in dem ersten Bereich miteinander zu vercrimpen. Alternativ oder zusätzlich ist es dabei zweckmäßig, wenn die Hülse, der Außenleiter und insbesondere die Schirmung in dem zweiten Bereich miteinander vercrimpt sind.

Es versteht sich, dass es insbesondere vorteilhaft ist, die Hülse, die Schirmung und den Außenleiter sowohl in dem ersten Bereich als auch in dem zweiten Bereich miteinander zu vercrimpen. Somit lässt sich der Crimp in dem ersten Bereich hinsichtlich der Haltekraft der Schirmung an der Hülse vorteilhaft auslegen und ein Crimp in dem zweiten Bereich lässt sich bezüglich des Außenleiters und Hülse besonders vorteilhaft ausgelegen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine schematische Perspektivansicht einer Hülse zur Montage an einem Kabel gemäß einer Ausführungsform der Erfindung;
- Fig. 2: eine schematische Seitenansicht einer Hülse zur Montage an einem Kabel gemäß einer Ausführungsform der Erfindung;
- Fig. 3: eine schematische Seitenansicht einer Hülse zur Montage an einem Kabel gemäß einer Ausführungsform der Erfindung;
- Fig. 4: eine schematische Seitenansicht eines Kabels gemäß einer Ausführungsform der Erfindung;
- Fig. 5: eine schematische Seitenansicht eines Kabels gemäß einer Ausführungsform der Erfindung;
- Fig. 6: eine schematische Seitenansicht einer Verbinderanordnung gemäß einer Ausführungsform der Erfindung;
- Fig. 7: eine schematische Seitenansicht einer Verbinderanordnung gemäß einer Ausführungsform der Erfindung.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

Im Folgenden werden die Figuren zusammenhängend und übergreifend beschrieben.

### BESCHREIBUNG VON AUSFÜHRUNGSBEISPIELEN

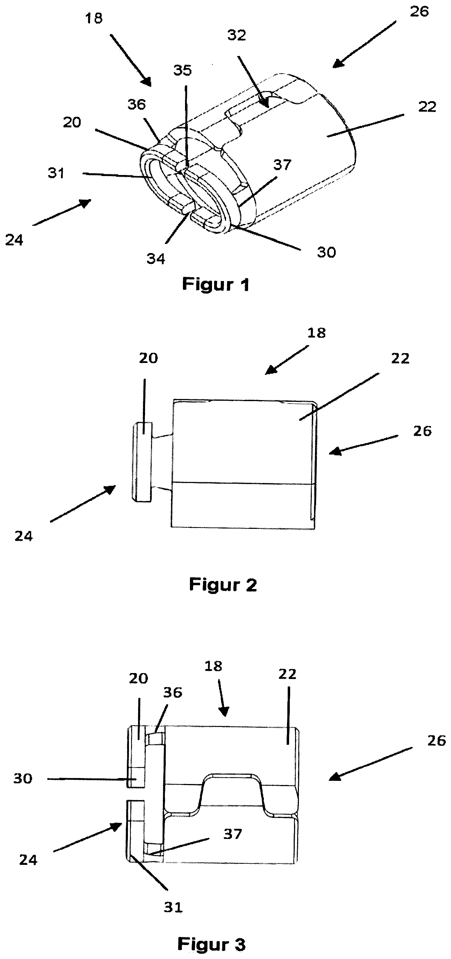

Figur 1 zeigt eine Hülse 18 zur Montage an einem Kabel 10 gemäß einer Ausführungsform der Erfindung. Die Hülse 18 weist einen ersten Bereich 20 mit einem länglichen Querschnitt auf. Der längliche Querschnitt ist in etwa langlochförmig und durch zwei gegenüberliegende U-förmige Laschen 30, 31 gebildet. Zwischen den Laschen 30, 31 ist die Hülse 18 von Unterbrechungen 34, 35 unterbrochen, d.h. gegenüberliegende Enden der Laschen 30, 31 berühren sich in einem unvercrimpten Zustand nicht. Die Hülse 18 weist ferner einen zweiten Bereich 22 mit einem im Wesentlichen runden Querschnitt auf. Im Wesentlichen bedeutet, dass der Querschnitt des zweiten Bereichs 22 lediglich näherungsweise rund ist und auf seiner Oberseite eine Einbuchtung 32 aufweist. Die Einbuchtung 32 befindet sich an einer Stelle, die sich in montiertem Zustand zwischen zwei Adern 12 befindet.

Dementsprechend ist in der Figur 1 der erste Bereich 20 mit dem länglichen Querschnitt an einem ersten, verbinderseitigen Ende 24 der Hülse 18 ausgebildet. Der zweite Bereich 22 der Hülse 18 ist an dem gegenüberliegenden kabelseitigem Ende 26 der Hülse ausgebildet.

Der erste Bereich 20 der Hülse 18 ist mit dem zweiten Bereich 22 der Hülse über zwei Stege 36, 37 verbunden. Dabei verbindet der Steg 36 die U-förmige Lasche 31 mit dem zweiten Bereich 22 der Hülse. Der Steg 37 verbindet die Lasche 30 mit dem zweiten Bereich 22 der Hülse.

Die Figur 2 zeigt eine Hülse 18 gemäß Figur 1 in einer Seitenansicht.

Die Figur 3 zeigt eine Hülse 18 gemäß Figur 1 bzw. Figur 2 in einer weiteren Seitenansicht, wobei die Hülse 18 in der Seitenansicht gemäß Figur 3 gegenüber der Seitenansicht aus Figur 2 um 90° gedreht ist.

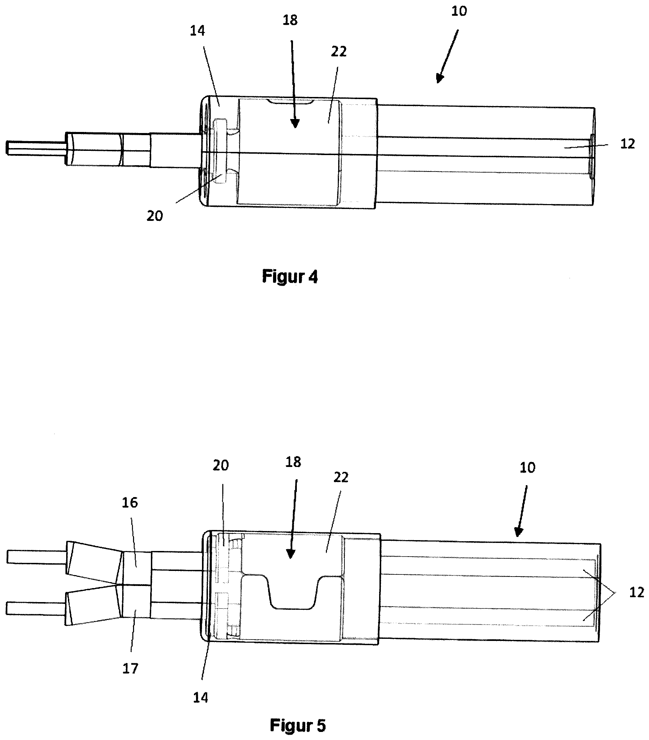

Die Figur 4 zeigt ein Kabel 10, auf welchem eine Hülse 18 montiert ist. Das Kabel weist zwei Adern 12 , welche jeweils von einem Isoliermittel 16 bzw. 17 umgeben sind, auf. Die isolierten Adern 12 sind von einer gemeinsamen Schirmung 14 umgeben. Die Schirmung 14 bildet einen Außenleiter des Kabels, der die Adern 12 vor äußeren elektromagnetischen Einflüssen abschirmt.

Die Schirmung 14 des Kabels 10 erstreckte sich ursprünglich zwischen zwei gegenüberliegenden Enden des Kabels 10. Die Schirmung 14 wurde jedoch im Rahmen einer weiteren Verarbeitung des Kabels 10 um die Hülse 18 umgeschlagen, derart, dass sich die Schirmung 14 von einem Ende des Kabels 10 bis zu dem verbinderseitigen Ende 24 der Hülse erstreckt und an dem verbinderseitigen Ende 24 der Hülse um die Hülse 18 umgeschlagen ist. Dabei erstreckt sich die umgeschlagene Schirmung bis hinter die Hülse 18.

Die Figur 5 zeigt ein Kabel 10 gemäß Figur 4 in einer Seitenansicht, wobei die Seitenansicht gemäß Figur 5 gegenüber der Seitenansicht von Figur 4 um 90° verdreht ist.

Aus der Zusammenschau der Figuren 4 und 5 geht hervor, dass die Schirmung 14 zwischen der Hülse 18 und den Adern 12 sich an den Querschnitt, den die beiden Adern 12 bilden, anlegt. Dementsprechend umschließt auch die Schirmung 14 einen länglichen Querschnitt.

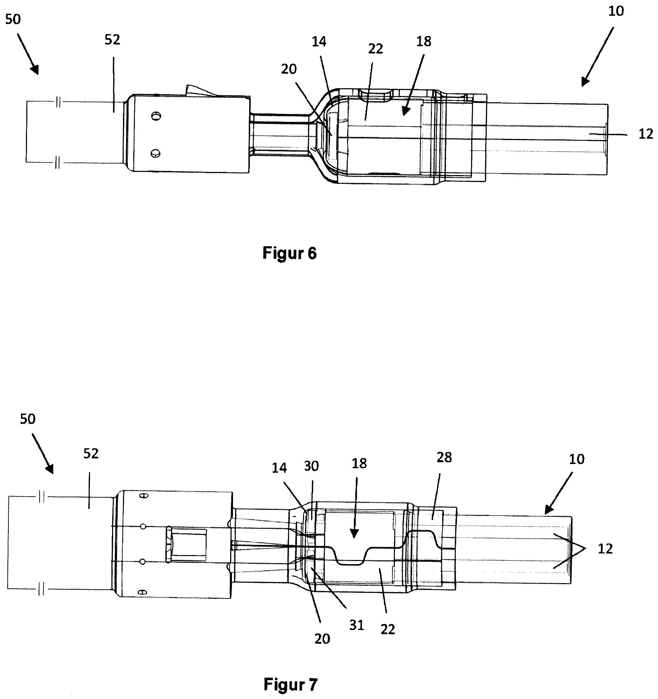

Die Figur 6 zeigt eine Verbinderanordnung 50 mit einem Kabel 10 gemäß Figur 4 bzw. Figur 5 in einer Seitenansicht. Aus Figur 4 bzw. Figur 6 ist ersichtlich, dass sich die Schirmung 14 bzw. der Außenleiter 52 in dem ersten Bereich 20 der Hülse nicht optimal an das Kabel anlegen. Mögliche negative elektrische Auswirkungen aufgrund dessen können jedoch abgeschwächt oder kompensiert werden, indem die Hülse 18 in diesem Bereich an den Adern 12 anliegt.

Die Figur 7 zeigt eine Verbinderanordnung 50 gemäß Figur 6 in einer Seitenansicht, wobei die Seitenansicht gemäß Figur 7 gegenüber der Seitenansicht von Figur 6 um 90° verdreht ist.

Aus der Zusammenschau der Figuren 4-7 ist ferner ersichtlich, dass der Außenleiter 52 bzw. die Schirmung 14 in dem zweiten Bereich 22 an der Hülse 18 anliegen.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

### Bezugszeichenliste

- 10: Kabel
- 12: Adern
- 14: Schirmung
- 16: Isoliermittel
- 17: Isoliermittel
- 18: Hülse
- 20: erster Bereich
- 22: zweiter Bereich
- 24: verbinderseitiges Ende der Hülse
- 26: gegenüberliegendes Ende der Hülse
- 28: Schirmung
- 30: U-förmige Lasche
- 31: U-förmige Lasche
- 32: Einbuchtung
- 34: Unterbrechung
- 35: Unterbrechung
- 36: Steg
- 37: Steg
- 50: Verbinderanordnung
- 52: Außenleiter

## Patentansprüche

1. Kabelanordnung aus einem Kabel (10) und einer Hülse (18), mit dem Kabel (10), welches an einem Ende mit einem Verbinder verbindbar ist, mit
wenigstens zwei Adern (12),
einer Schirmung (14),
wenigstens einem Isoliermittel (16; 17), welches zwischen den Adern und der Schirmung ausgebildet ist, und mit der
Hülse (18), welche an dem Ende des Kabels ausgebildet ist,
wobei die Hülse einen ersten Bereich (20) mit einem länglichen Querschnitt aufweist und einen zweiten Bereich (22) mit einem im Wesentlichen runden Querschnitt aufweist,
wobei die Hülse auf der Schirmung ausgebildet ist, und ein verbinderseitiges Ende der Schirmung (28) um die Hülse umgeschlagen ist, wobei sich die umgeschlagene Schirmung (28) bis hinter die Hülse erstreckt.

2. Kabelanordnung nach Anspruch 1, wobei der erste Bereich an einem ersten verbinderseitigen Ende der Hülse (24) und der zweite Bereich an einem gegenüberliegenden Ende der Hülse (26) ausgebildet ist.

3. Kabelanordnung nach einem der vorstehenden Ansprüche, wobei die wenigstens zwei Adern miteinander verdrillt sind.

4. Kabelanordnung nach einem der vorstehenden Ansprüche, wobei der erste Bereich wenigstens zwei U-förmige Laschen (30, 31), insbesondere zwei gegenüberliegende oder vier Laschen, aufweist.

5. Kabelanordnung nach Anspruch 4, wobei sich die U-förmigen Laschen kontaktieren oder überlappen.

6. Kabelanordnung nach einem der vorstehenden Ansprüche, wobei die Hülse, insbesondere in dem zweiten Bereich, eine Einbuchtung (32), welche konturfolgend zu der Schirmung ist, aufweist.

7. Kabelanordnung nach einem der vorstehenden Ansprüche, wobei die Hülse in dem ersten Bereich eine Unterbrechung, insbesondere zwei Unterbrechungen (34; 35), aufweist.

8. Kabelanordnung nach einem der vorstehenden Ansprüche, wobei der erste Bereich der Hülse mit dem zweiten Bereich der Hülse mittels eines Stegs (36; 37) verbunden sind.

9. Verbinderanordnung (50) mit einem Verbinder und mit einer Kabelanordnung nach einem der vorstehenden Ansprüche, welche an einem verbinderseitigen Ende mit dem Verbinder verbunden ist, indem ein Außenleiter (52) der Verbinderanordnung mit dem Kabel vercrimpt ist.

10. Verbinderanordnung nach Anspruch 9, wobei die Hülse, die Schirmung und der Außenleiter in dem ersten Bereich miteinander vercrimpt sind.

11. Verbinderanordnung nach einem der Ansprüche 9 oder 10, wobei die Hülse, der Außenleiter und insbesondere die Schirmung in dem zweiten Bereich miteinander vercrimpt sind.

## Claims

1. A cable arrangement consisting of a cable (10) and a sleeve (18), having the cable (10), which can be connected at one end to a connector, having at least two wires (12), a shield (14), at least one insulating means (16; 17), which is formed between the wires and the shield, and having the sleeve (18), which is formed at the end of the cable,
wherein the sleeve has a first region (20) with an elongated cross-section and has a second region (22) with a substantially round cross-section,
wherein the sleeve is formed on the shield, and a connector-side end of the shield (28) is folded around the sleeve, wherein the folded shield (28) extends to behind the sleeve.

2. The cable arrangement according to claim 1, wherein the first region is formed on a first connector-side end of the sleeve (24) and the second region is formed on an opposite end of the sleeve (26).

3. The cable arrangement according to any one of the preceding claims, wherein the at least two wires are twisted together with each other.

4. The cable arrangement according to any one of the preceding claims, wherein the first region has at least two U-shaped tabs (30, 31), in particular, two opposite or four tabs.

5. The cable arrangement according to claim 4, wherein the U-shaped tabs contact and overlap.

6. The cable arrangement according to any one of the preceding claims, wherein the sleeve, in particular in the second region, has an indentation (32), which follows the contour of the shield.

7. The cable arrangement according to any one of the preceding claims, wherein the sleeve has an interruption, in particular two interruptions (34; 35), in the first region.

8. The cable arrangement according to any one of the preceding claims, wherein the first region of the sleeve is connected to the second region of the sleeve by means of a web (36; 37).

9. A connector arrangement (50) having a connector and having a cable arrangement according to any one of the preceding claims, which is connected to the connector at a connector-side end, by the outer conductor (52) of the connector arrangement being crimped to the cable.

10. The connector arrangement according to claim 9, wherein the sleeve, the shield and the outer conductor are crimped to one another in the first region.

11. The connector arrangement according to any one of claims 9 or 10, wherein the sleeve, the outer conductor and in particular the shield are crimped to one another in the second region.

## Revendications

1. Disposition de câble constituée d'un câble (10) et d'un manchon (18), avec le câble (10), qui peut être relié, à une extrémité, avec un connecteur, avec
au moins deux fils (12),
un blindage (14),
au moins un moyen d'isolation (16 ; 17) qui est disposé entre les fils et le blindage et avec le manchon (18) qui est réalisé à l'extrémité du câble,
dans laquelle le manchon comprend une première partie (20) avec une section transversale allongée et une deuxième partie (22) avec une section transversale globalement ronde,
dans laquelle le manchon est réalisé sur le blindage et une extrémité côté connecteur du blindage (28) est rabattu autour du manchon, dans laquelle le blindage (28) rabattu s'étend jusque derrière le manchon.

2. Disposition de câble selon la revendication 1, dans laquelle la première partie est réalisée à une première extrémité côté connecteur du manchon (24) et la deuxième partie est réalisée à une extrémité opposée du manchon (26).

3. Disposition de câble selon l'une des revendications précédentes, dans laquelle les au moins deux fils sont torsadés l'un avec l'autre.

4. Disposition de câble selon l'une des revendications précédentes, dans laquelle la première partie comprend au moins deux attaches en forme de U (30, 31), plus particulièrement deux attaches opposées ou quatre attaches.

5. Disposition de câble selon la revendication 4, dans laquelle les attaches en forme de U sont en contact ou se superposent.

6. Disposition de câble selon l'une des revendications précédentes, dans laquelle le manchon, plus particulièrement dans la deuxième partie, comprend un renfoncement (32) qui suit le contour du blindage.

7. Disposition de câble selon l'une des revendications précédentes, dans laquelle le manchon comprend, dans la première partie, une interruption, plus particulièrement deux interruptions (34 ; 35).

8. Disposition de câble selon l'une des revendications précédentes, dans laquelle la première partie du manchon est reliée avec la deuxième partie du manchon au moyen d'une nervure (36 ; 37).

9. Disposition de connecteur (50) avec un connecteur et avec une disposition de câble selon l'une des revendications précédentes, qui est reliée au connecteur à une extrémité côté connecteur, en sertissant un conducteur externe (52) de la disposition de connecteur avec le câble.

10. Disposition de connecteur selon la revendication 9, dans laquelle le manchon, le blindage et le conducteur externe sont sertis entre eux dans la première partie.

11. Disposition de connecteur selon la revendication 9 ou 10, dans laquelle le manchon, le conducteur externe et plus particulièrement le blindage sont sertis entre eux dans la deuxième partie.
